# EUROPÄISCHE PATENTSCHRIFT

(11) **EP 0 447 772 B1**
(45) Veröffentlichungstag und Bekanntmachung des Hinweises auf die Patenterteilung: **24.05.1995**
(21) Anmeldenummer: 91101403.3
(22) Anmeldetag: 02.02.1991
(51) Int. Cl.: B23D 55/08, B23Q 11/02

(54) **Sägebandführung**
Bandsaw guide
Guide de scie à ruban

(30) Priorität: 23.03.1990 DE 4009405
(43) Veröffentlichungstag der Anmeldung: 25.09.1991
(73) Patentinhaber: HEINZ NIENSTEDT MASCHINENFABRIK GMBH, D-45721 Haltern (DE)
(72) Erfinder: Rosenberger, Jörg, W-4358 Haltern-Flaesheim (DE); Book, Franz, W-4358 Haltern (DE)
(74) Vertreter: Cohausz & Florack Patentanwälte

(56) Entgegenhaltungen:
- EP-A- 0 155 328
- DE-A- 3 241 471
- DE-U- 8 228 862
- FR-A- 2 622 832
- US-A- 1 870 774
- US-A- 2 741 281
- US-A- 3 280 862
- US-A- 3 530 752
- US-A- 3 689 168
- US-A- 4 648 301

## Beschreibung

Die Erfindung betrifft eine Sägebandführung bestehend aus einem das Sägeband an dessen zahnloser Hinterkante abstützenden Stützelemente, insbesondere Stützrolle, und einer Führungsgabel, zwischen deren Gabelästen das Sägeband unter Anlage an innenseitig an den Kabelästen befestigten, als Platten mit einander zugekehrten großflächigen Stützflächen ausgebildeten Hartmetallkörpern geführt ist, wobei die der Bandlaufrichtung zugekehrte Vorderkante der Platten mit dem Sägeband einen stumpfen Winkel einschließen. Eine solche Sägebandführung ist vom Stand der Technik bekannt.

Beim Portionieren von tiefgefrorenen Lebensmittelblöcken, insbesondere tiefgefrorenen Fischblöcken, werden Bandsägen eingesetzt. Um beim Einsatz solcher Bandsägen keinen hohen Schnittverlust in Kauf nehmen zu müssen und um Portionen mit kleinen Gewichtstoleranzen zu erhalten, müssen die Sägebänder nicht nur sehr dünn sein, sondern auch flatterfrei möglichst nahe am Block geführt werden. Bei einer aus der Praxis bekannten Sägebandführung der eingangs genannten Art werden diese Forderungen nicht optimal erfüllt. Die Gabeläste sind jeweils mit einem schmalen, geneigt zur Laufrichtung des Sägebandes angeordneten Hartmetallkörper bestückt, wobei die beiden Hartmetallkörper zueinander über Kreuz angeordnet sind. Beim Betrieb einer solchen Sägebandführung wurde festgestellt, daß die Hartmetallkörper und das Band im Bereich des Kreuzungspunktes einem erhöhten Verschleiß unterliegen. Dieser Verschleiß führt zu einer Verminderung der ohnehin von Anfang an nicht optimalen Seitenführung des Sägebandes.

Aber nicht nur zu diesem Zweck, sondern auch zu anderen Zwecken werden Seitenführungen des Sägebandes verwendet. Bei einem bekannten Sägeband (DE-A-36 23 962) sind zwei Sägebandführungen der eingangs genannten Art mit Abstand voneinander angeordnet, um das über Rollen geführte Sägeband um 90^{o} zu verdrillen und danach wieder zurück zu verdrillen, damit es in dem Bereich zwischen den beiden Sägebandführungen mit seiner gezahnten Vorderkante dem Schneidgut zugekehrt ist. In diesem Fall dient die Anordnung der Vorderkante des Hartmetallkörpers der in Bandlaufrichtung ersten Sägebandführung und der Hinterkante des Hartmetallkörpers deren Bandlaufrichtung zweiten Sägebandführung der geometrischen Anpassung an das verdrillte Band.

Bei einer anderen bekannten Sägebandführung (DE-U-82 28 862.3), bei der das Sägeband nicht verdrillt wird, wird es zwischen den Gabelästen eines Blockes unter rückseitiger Abstützung an einem Einsatz aus Hartmetall geführt. Damit das zerspante Gut nicht in den Bereich der Abstützung gelangt, sind die Gabeläste an ihren Vorderkanten derart schräg ausgebildet, daß das zerspante Gut in Richtung des Schnittes geführt wird. Ein derartiger Abtransport des zerspanten Gutes kann zu Störungen an der Schnittkante führen.

Der Erfindung liegt die Aufgabe zugrunde, eine Sägebandführung zu schaffen, die über eine lange Betriebsdauer dem Sägeband eine sehr präzise seitliche Führung gibt. Dabei soll insbesondere das beim Sägen anfallende zerspante Gut nicht im Schnittbereich beeinträchtigen.

Diese Aufgabe wird erfindungsgemäß dadurch gelöst, daß die Führungsgabel benachbart zu der Hinterkante des Sägebandes einen Freiraum aufweist, und daß die Vorderkanten der Platten in der Ebene der Stützflächen der Platten liegend, im stumpfen Winkel zur die Zähne tragenden Vorderkante des Sägebandes ausgerichtet sind und eine Führung für das auf die Vorderkanten der Platten treffende, vom Sägeband abgestreifte Gut entlang der Vorderkanten der Platten in den Freiraum bilden.

Bei dieser Sägebandführung wird im Unterschied zu der bekannten Sägebandführung das Sägeband nicht nur punktuell, sondern großflächig geführt. Aufgrund der Orientierung der Vorderkanten ist gewährleistet, daß sich beim Lauf des Sägebandes eine gegen das Stützelement wirkende Kraftkomponente einstellt, so daß auch keine Gefahr besteht, daß das Band von dem Stützelement abhebt. Darüber hinaus wird durch die besondere Orientierung der Vorderkanten in Verbindung mit der engen flächigen Bandführung erreicht, daß am Sägeband haftendes Schneidgut weitgehend abgestreift und abgeleitet wird und nicht zwischen die Platten gelangt. Das abgeleitete Schneidgut wird in Richtung der Bandhinterkante geführt, wo zwischen den Gabelästen genügend Raum für die weitere Abfuhr des Schneidgutes ohne Verstopfungsgefahr zur Verfügung steht. Der Abstreifeffekt der Vorderkanten der Platten bezüglich des auf dem Sägeband haftenden Schneidgutes kann weiter noch dadurch verbessert werden, daß die Vorderkanten zu der dem Sägeband abgewandten Seite abgeschrägt sind.

Bevorzugt werden als Hartmetallkörper dreieckige Platten eingesetzt. Der Führungsspalt zwischen den Platten hat besonders enge Toleranzen, wenn nach einer Ausgestaltung der Erfindung die Platten aus einem zwischen den Gabelästen verankerten Block bestehen, der mittig zur Bildung des Führungsspaltes für das Sägeband, insbesondere mittels eines Laserstrahls, durchtrennt ist.

Im folgenden wird die Erfindung anhand einer ein Ausführungsbeispiel darstellenden Zeichnung näher erläutert. Im einzelnen zeigen:

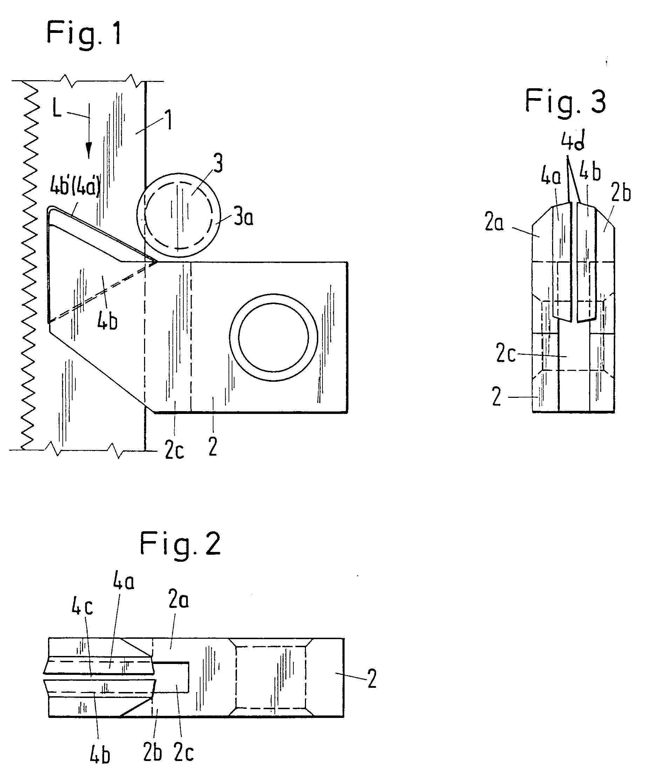

- Figur 1: eine Sägebandführung bestehend aus Stützrolle und Führungsgabel in Seitenansicht,
- Figur 2: die Führungsgabel der Sägebandführung gemäß Figur 1 in Aufsicht
**und**
- Figur 3: die Führungsgabel der Sägebandführung gemäß Figur 1 in Vorderansicht.

Die in der Zeichnung dargestellte Sägebandführung für ein Sägeband 1 ist in einem nicht dargestellten Halter angeordnet. Sie besteht aus einer Führungsgabel 2 und einer Stützrolle 3. Das Sägeband 1 ist mit seiner zahnlosen Hinterkante in einer Nut 3a der Stützrolle 3 abgestützt. Die Führungsgabel 2 weist zwei Gabeläste 2a,2b auf, die innenseitig mit dreieckigen Hartmetallplatten 4a,4b bestückt sind. Diese Hartmetallplatten 4a,4b sind an den Gabelästen 2a,2b angelötet. Sie sind aus einem angelöteten Block gefertigt, der zur Bildung eines Führungsspaltes 4c mittels eines Laserstrahls durchtrennt ist. Die Gabeläste 2a,2b mit den angelöteten Platten 4a,4b sind entgegen der Laufrichtung L des Sägebandes 1 nach oben abgewinkelt. Dabei ergibt sich eine geometrische Konfiguration, bei der die den Sägezähnen benachbarte Kante einer jeden Platte 4a,4b parallel zu den Sägezähnen und die der Laufrichtung zugekehrte Vorderkante 4a',4b' einer jeden Platte 4a,4b mit der Laufrichtung L einen stumpfen Winkel einschließt. Die Platten 4a,4b sind an ihren insbesondere an die Vorderkanten 4a',4b' angrenzenden Kantenflächen 4d zur Rückseite abgeschrägt, wodurch vor allem das Abstreifen von am Sägeband haftendem Schneidgut erleichtert wird. Das abgestreifte Schneidgut wird in Richtung der Hinterkante des Sägebandes 1 gefördert, wo es durch den breiten Freiraum 2c zwischen den Gabelästen 2a,2b abgefördert wird.

## Patentansprüche

1. Sägebandführung bestehend aus einem das Sägeband (1) an dessen zahnloser Hinterkante abstützenden Stützelemente, insbesondere Stützrolle (3), und einer Führungsgabel (2), zwischen deren Gabelästen (2a,2b) das Sägeband (1) unter Anlage an innenseitig an den Gabelästen (2a,2b) befestigten, als Platten (4a,4b) mit einander zugekehrten großflächigen Stützflächen ausgebildeten Hartmetallkörpern geführt ist, wobei die der Bandlaufrichtung zugekehrte Vorderkante (4a',4b') der Platten (4a,4b) mit dem Sägeband (1) einen stumpfen Winkel einschließen,
**dadurch gekennzeichnet,**
- daß die Führungsgabel (2) benachbart zu der Hinterkante des Sägebandes (1) einen Freiraum (2c) aufweist, und
- daß die Vorderkanten der Platten (4a,4b) in der Ebene der Stützflächen der Platten (4a,4b) liegend, im stumpfen Winkel zur die Zähne tragenden Vorderkante des Sägebandes ausgerichtet sind und eine Führung für das auf die Vorderkanten (4a',4b') der Platten (4a,4b) treffende, vom Sägeband (1) abgestreifte Gut entlang der Vorderkanten (4a',4b') der Platten (4a,4b) in den Freiraum (2c) bilden.

2. Sägebandführung nach Anspruch 1,
**dadurch gekennzeichnet, daß** die die Vorderkanten (4a',4b') angrenzenden Kantenflächen (4d) zu der dem Sägeband (1) abgewandten Seite abgeschrägt sind.

3. Sägebandführung nach Anspruch 1 oder 2,
**dadurch gekennzeichnet,** daß die Hartmetallkörper (4a,4b) dreieckige Platten sind.

4. Sägebandführung nach Anspruch 1 oder 2,
**dadurch gekennzeichnet,** daß die Gabeläste (2a,2b) entgegen der Bandlaufrichtung (L) abgewinkelt sind und das Stützelement (3) hinter den abgewinkelten Gabelästen (2a,2b) angeordnet ist.

5. Sägebandführung nach einem der Ansprüche 1 bis 4,
**dadurch gekennzeichnet,** daß die Platten (4a,4b) aus einem zwischen den Gabelasten (2a,2b) verankerten Block bestehen, der mittig zur Bildung des Führungsspaltes (4c) für das Sägeband (1), insbesondere mittels Laserstrahl, durchtrennt ist.

## Claims

1. A saw band guide, comprising a supporting element, more particularly a supporting roller (3) supporting the unserrated rear edge of the saw band (1), and a guide fork (2) between whose fork branches (2a, 2b), fitted on the inside with hard metal bodies (4a, 4b), the saw band (1) is guided with its sides bearing against the hard metal bodies (4a, 4b), taking the form of plates having large-area bearing surfaces one another, their front edges (4a', 4b') facing the direction in which the saw band (1) runs enclosing an obtuse angle therewith, characterized
- in that the guide fork (2) has an opening (2c) adjacent to the rear edge of the band (1),
- and front edges of the plates 4a, 4b lie in the plane of the bearing surfaces and enclose the obtuse angle teeth bearing front edge of the band and form a guidance for the sawn material impacting the front edges (4a', 4b') of the plates (4a, 4b) and stripped off the saw band (1) along the plate front edges (4a', 4b') into the opening (2c).

2. A saw band guide according to claim 1, characterized in that the edge areas (4a) adjacent to the front edges (4a', 4b') are chamfered towards the side remote from the saw band (1).

3. A saw band guide according to claims 1 or 2, characterized in that the hard metal bodies (4a, 4b) are triangular plates.

4. A saw band guide according to claims 1 or 2, characterized in that the fork branches (2a, 2b) are bent oppositely to the direction (L) in which the band runs, and the bearing element (3) is disposed behind the bent fork branches (2a, 2b).

5. A saw band guide according to one of claims 1 to 4, characterized in that the plates (4a, 4b) consist of a block which is anchored between the fork branches (2a, 2b) and is parted in the centre, more particularly by means of a laser beam, to form the guide gap (4c) for the saw band (1).

## Revendications

1. Guide pour scie à ruban qui comprend un élément d'appui tel un galet (3) contre lequel repose la tranche postérieure dépourvue de dent d'un ruban de scie (1), et une fourche de guidage (2) entre les branches (2a, 2b) de laquelle le ruban de scie (1) est guidé par l'entremise de pastilles faites en métal dur et se présentant sous la forme de plaquettes (4a, 4b) avec des portées de grande surface en vis à vis fixées à l'intérieur des branches (2a, 2b) de manière que les bords frontaux (4a', 4b') des plaquettes (4a, 4b) orientés vers la trajectoire du ruban forment un angle obtus avec le ruban de scie (1) et qui est caractérisé en ce que la fourche de guidage (2) est pourvue d'un espace libre (2c) au voisinage de la tranche postérieure du ruban de scie (1) et en ce que les bords frontaux des plaquettes (4a, 4b) situés dans le plan des portées sont orientés pour former un angle obtus avec la tranche antérieure pourvue de dent du ruban de scie et pour constituer un chenal vers l'espace libre (2c) afin d'y diriger les particules de sciure enlevées du ruban de scie (1) qui leur parviennent.

2. Guide pour scie à ruban selon la revendication 1, caractérisé en ce que les bords frontaux (4a', 4b') voisins du ruban de scie (1) sont munis de biseaux (4d).

3. Guide pour scie à ruban selon la revendication 1 ou 2, caractérisé en ce que les pastilles en métal dur (4a, 4b) sont des plaquettes triangulaires.

4. Guide pour scie à ruban selon la revendication 1 ou 2, caractérisé en ce que les branches (2a, 2b) sont coudées en direction de la trajectoire (L) du ruban et en ce que l'élément d'appui (3) est situé derrière les branches coudées (2a, 2b).

5. Guide pour scie à ruban selon l'une des revendications 1 à 4, caractérisé en ce que les plaquettes (4a, 4b) sont constituées d'un bloc qui est fixé entre les branches (2a, 2b) et qui est fendu par le milieu notamment à l'aide d'un faisceau laser pour constituer la fente (4c) de guidage du ruban de scie (1).
